# EUROPEAN PATENT APPLICATION

(11) **EP 2 910 593 A1**
(43) Date of publication of application: **26.08.2015**
(21) Application number: 14156451.8
(22) Date of filing: 25.02.2014
(51) Int. Cl.: C08J 3/12, C08F 283/10, C08F 2/22

(54) **Thermoset-thermoplastic hybrid nanoparticles and composite films**

(71) Applicant: Henkel AG & Co. KGaA, 40589 Düsseldorf (DE); Max-Planck-Gesellschaft zur Förderung der Wissenschaften e.V., 80539 München (DE)
(72) Inventor: Taden, Andreas, 40597 Düsseldorf (DE); Landfester, Katharina, 55122 Mainz (DE); Zhang, Yang, 40233 Düsseldorf (DE)

(57) **Abstract**

The present invention relates to a method for the generation of thermoset-thermoplastic hybrid nanoparticles with a hard phase and a soft phase, wherein the hard phase comprises or consists of a thermosetting polymer and the soft phase comprises or consists of a thermoplastic polymer, the method including a) providing a mixture of a thermosetting resin, monomers of a thermoplastic polymer, and a curing agent for the thermosetting resin; b) dispersing the mixture into an aqueous medium to form a miniemulsion, c) polymerizing the thermosetting resin in the miniemulsion by stepwise polymerization to form a seed emulsion of thermoplastic monomer swollen thermosetting polymer nanoparticles; d) adding monomers of the thermoplastic polymer to the seed emulsion; and e) adding a polymerization initiator and polymerizing the monomers of the thermoplastic polymer by free radical polymerization to form the core-shell nanoparticle. Also encompassed are the thus produced thermoset-thermoplastic hybrid nanoparticles and their use in thin films for the application in coatings and adhesives.

## Description

The present invention relates to a method for the generation of structured thermoset-thermoplastic hybrid nanoparticles and composite films as well as the thus generated hybrid nanoparticles and the use thereof in thin films, coatings and adhesives.

Over the last decade, hybrid particles with different micro-morphologies have attracted tremendous academic and industrial interest. The most typical feature of these particles is the combination of materials with divergent physicochemical properties in a confined space, such as single particles. A variety of materials, such as noble metal, metal oxide nanoparticles and polymers, have been used to produce such particles.

For example, polymer-based hybrid particles consisting of soft polymer and rigid material have been used in water-borne coating and adhesive industry for production of films with comprehensive properties. During drying, hard materials form isolated domains as reinforcements providing mechanical, thermal and barrier properties, while soft polymer fuse together and form continuous films. Environmentally problematic volatile additives and organic solvents to assist the film-formation process through softening are not required or the amount can be significantly reduced. Examples of rigid materials that may be used to form reinforcements include inorganic fillers such as silica, and polymers with high glass transition temperature (T_{g}), such as polystyrene.

Generally speaking, inorganic fillers are more efficient than high T_{g} polymers, in particular, for improving mechanical and thermal properties, because they are harder and more stable. Notwithstanding the above, there exist two problems relating to use of inorganic fillers in numerous applications. Firstly, substantial time and large quantities of dispersants are required to disperse inorganic fillers in an organic phase. Secondly, the transparency of the derived films usually decreases dramatically when the concentration of the inorganic fillers is higher than about 4 wt% to 5 wt% due to significant differences in refractive index between organic and inorganic phases.

As mentioned above, polymer-based hybrid particles have been produced using high T_{g} polymers as reinforcement. However, due to difficulties in obtaining stable aqueous dispersions with cured thermosetting polymers as dispersing phase through conventional methods, high T_{g} polymers that have been used as rigid material in polymer-based particles are limited to thermoplastic polymers, which are mostly prepared by free radical polymerization.

However, it would be desirable to use thermosetting polymers as reinforcements, as thermosetting polymers are supposed to be more suitable as a rigid material due to their high degree of crosslinking and excellent mechanical properties like stiffness and thermal and chemical stability.

In view of the above, there exists a need for improved methods to generate structured hybrid nanoparticles having thermosetting polymer domains and the thus produced nanoparticles. The present invention is based on the inventors' finding that structured thermoset-thermoplastic nanoparticles may be formed by a novel two-step polymerization technique involving stepwise polymerization and free radical polymerization in a miniemulsion setup.

In a first aspect, the present invention thus relates to a method for the generation of thermoset-thermoplastic hybrid nanoparticles with a hard phase and a soft phase, wherein the hard phase comprises or consists of a thermosetting polymer and the soft phase comprises or consists of a thermoplastic polymer, the method comprising:
a) providing a mixture of a thermosetting resin, monomers of a thermoplastic polymer, and a curing agent for the thermosetting resin;
b) dispersing the mixture into an aqueous medium to form a miniemulsion,
c) polymerizing the thermosetting resin in the miniemulsion by stepwise polymerization to form a seed emulsion of thermoplastic monomer swollen thermosetting polymer nanoparticles;
d) adding monomers of the thermoplastic polymer to the seed emulsion; and
e) adding a polymerization initiator and polymerizing the monomers of the thermoplastic polymer by free radical polymerization to form the thermoset-thermoplastic hybrid nanoparticles.

In the method of the invention, the thermoset domains can act as a dispersing phase in hybrid material, acting as reinforcement joints for soft matrix material. Furthermore, high concentrations of hard domains derived from thermosetting polymers do not affect transparency of hybrid thin films, thereby providing for hybrid films that are usually transparent due to small refractive index differences between the polymers.

In a second aspect, the invention relates to a thermoset-thermoplastic hybrid nanoparticle formed by a method according to the first aspect.

In a third aspect, the invention relates to a thermoset-thermoplastic hybrid nanoparticle comprising
■ a hard phase comprising or consisting of a thermosetting polymer; and
■ a soft phase comprising or consisting of a thermoplastic polymer,
wherein the hybrid nanoparticles have a z-average size of between 100 nm to 200 nm.

In a fourth aspect, the invention relates to use of a thermoset-thermoplastic hybrid nanoparticle formed by a method according to the first aspect or a thermoset-thermoplastic nanoparticle according to the third aspect in thin films for application as coatings and adhesives.

In still another aspect, the invention also encompasses films containing the nanoparticles described herein.

Generally, the term "nanoparticles", as used herein, refers to particles with a size, i.e. diameter in their greatest dimension, below 1 µm, such as in the range of about 100 nm to about 700 nm, about 100 nm to about 500 nm, about 100 nm to about 200 nm, about 300 nm to about 700 nm, about 300 nm to about 500 nm, or in the range of about 500 nm to about 700 nm. In various embodiments of the described methods, the core-shell nanoparticles have a particle diameter of 100 nm to 200 nm, such as about 150 nm or about 200 nm. The diameter, as used in this context, refers to the diameter in the greatest dimension in case the nanoparticles are not spherical. In various embodiments, the nanoparticles may have an essentially spherical form. It should be noted that the "size" here is the "z-average" size of particles in diameter, which can be measured by a Malvern Zetasizer.

The term "thermoset-thermoplastic hybrid nanoparticles" refers to nanoparticles in which there are two phases: a thermoset phase (also referred to as hard phase) and thermoplastic phase (also referred to as soft phase). Each phase can comprise one or more distinct domains. In this context, "domain" refers to spatially confined regions within the particle formed by the thermoset or the thermoplastic material. Moreover, the thermoset phase may form separate domains after film-formation. In specific embodiments, the thermoset phase may be encapsulated by an outer layer of thermoplastic materials, i.e. the thermoplastic phase, thereby forming core-shell structures.

"At least", as used herein, relates to one or more, for example 2, 3, 4, 5, 6, 7, 8, 9 or more.

Herein, the thermosetting polymer in the hybrid nanoparticles is also simply referred to as "thermoset". As used herein, the term "thermosetting polymer" or "thermoset" refers to an irreversibly cured infusible, insoluble polymer network. Once hardened a thermoset cannot be reheated and melted to be shaped differently. Accordingly, the term "thermosetting polymer" or "thermosetting resin" relates to a class of polymers in soft solid or viscous state, including a liquid state, which transform (cure) irreversibly upon heating or irradiation to form a solid, highly crosslinked matrix, i.e. the thermoset.

Thermosetting polymers may be cured by a step-wise polymerization process, such as polyaddition and polycondensation. Such processes typically involve the use of an uncured resin and a curing agent. As used herein, the term "step-wise polymerization" refers to polymerization where any two units of the polymer of any size, including monomers, oligomers and polymers present in the reaction mixture, can link together at any time, meaning that the growth of the polymer is not confined to chains.

In the methods described herein, an uncured thermosetting resin is thus used to form the miniemulsion and is then subsequently cured to form the seed emulsion. Accordingly, reference to a "thermosetting resin" in the context of the described methods means an uncured thermosetting resin, which may be a monomer, oligomer and prepolymer.

Examples of thermosetting polymers include, but are not limited to, epoxy resins, polyurethanes, silicones, un-saturated esters, phenolic resins and any other hydrocarbon based polymers that are capable of forming a three-dimensional cross-linked structure upon curing. In various embodiments, the thermosetting polymer comprises or consists of an epoxy resin. "Epoxy resin" may be any resin comprising epoxy groups. In specific embodiments, the thermosetting polymer comprises or consists of bisphenol epoxy resin, in particular bisphenol F epoxy resin.

In various embodiments, the thermosetting polymer has a glass transition temperature in the range of -30 °C to 120 °C, such as in the range of -30 °C to 100 °C, -30 °C to 60 °C, -30 °C to 20 °C, - 30 °C to 0 °C, 0 °C to 120 °C, 0 °C to 80 °C, 0 °C to 40 °C, 0 °C to 20 °C, 15 °C to 40 °C, 20 °C to 120 °C, 20 °C to 90 °C, 20 °C to 50 °C, 50 °C to 120 °C, 50 °C to 90 °C, or 60 °C to 90 °C. In various embodiments, the glass transition temperature of the thermosetting polymer is in the range of 20 °C to 90 °C.

The term "curing agent", as used herein, refers to a compound capable of initiating or catalyzing polymerization of a thermosetting resin to form a thermoset polymer with highly crosslinked networks. In various embodiments, the curing agent for the thermosetting resin is selected from polyfunctional amines, acids and acid anhydrides, phenols, alcohols and thiols. In embodiments wherein the thermosetting resin comprises or consists of an epoxy resin, the curing agent for the thermosetting polymer preferably comprises or consists of a phenalkamine.

The epoxy resin/curing agent concentration in the mixture may be in the range of about 5 wt% to about 100 wt%. For example, the epoxy/curing agent concentration in the mixture may be in the range of about 25 wt% to about 75 wt%, such as about 25 wt% to about 50 wt%, about 25 wt% to about 35 wt%, about 50 wt% to about 75 wt%, about 65 wt% to about 75 wt%, about 30 wt% to about 50 wt%, about 40 wt% to about 60 wt%, about 25 wt%, about 50 wt%, or about 75 wt%. In various embodiments, the epoxy/curing agent concentration in the mixture is in the range of about 25 wt% to about 75 wt%.

The soft phase in the thermoset-thermoplastic hybrid nanoparticles comprises or consists of a thermoplastic polymer. As used herein, the term "thermoplastic polymer" refers generally to a polymer that softens or melts when exposed to heat and returns to its original condition upon cooling. Examples of thermoplastic polymers include, but are not limited to, polystyrenes, polyolefins, polyamides, polyacrylates, polycarbonates, polyesters, polyether sulfones, polyether sulfides, polyether ketones, and mixtures thereof.

In various embodiments, the thermoplastic phase or soft phase comprises or consists of a vinyl polymer formed by free radical polymerization of vinyl monomers. "Vinyl monomers", as used herein, relates to monomeric compounds that comprise a vinyl group, such as ethene, propene, butadiene, styrene, vinyl acetate, (meth)acrylic acid and esters thereof, and the like.

The method described herein according to the first aspect includes providing a mixture of a thermosetting resin, monomers of a thermoplastic polymer, and a curing agent for the thermosetting resin. Examples of suitable thermosetting resins, thermoplastic polymers and the respective monomers, and curing agents for the thermosetting resin have already been described above. In various embodiments, the thermoplastic monomers are vinyl monomers. In various embodiments, the thermosetting polymer, monomers of a thermoplastic polymer, and a curing agent for the thermosetting polymer may be present in liquid or melted state. It has to be noted that vinyl monomers also act as reactive diluents for viscous thermosetting resins, which avoids the use of volatile organic solvents and facilitates the emulsification process of thermosetting resins.

The method of the first aspect includes dispersing the mixture into an aqueous medium to form a miniemulsion.

Furthermore, using one-pot reaction by first generating a miniemulsion containing monomers, with subsequent polymerization of the monomers in the miniemulsion through free radical polymerization and stepwise polymerization, hybrid particles containing a thermosetting polymer phase may be generated. The free radical polymerization and stepwise polymerization may be carried out concurrently or sequentially.

The term "miniemulsion" as used herein refers to a type of emulsion, where the disperse phase is present in very finely distributed droplets with an average droplet diameter (z-average as mentioned before) of less than 500 nm. An emulsion or miniemulsion may be formed by dispersing small droplets of one liquid in another liquid, and keeping the droplets separated and distributed. The small droplets of the dispersed liquid are called the dispersed phase, while the other liquid, within which the small droplets of liquid are dispersed, is called the continuous phase. In various embodiments, the miniemulsions formed are oil-in-water (O/W) emulsions, i.e. emulsions in which water is used in excess and is the continuous medium.

In various embodiments, formation of miniemulsions include shearing a mixture having two or more immiscible liquids, and one or more surface-active substances such as surfactants and emulsifiers with a high energy input. The high energy input for the production of miniemulsions may take place, for example, through ultrasound treatment or through using a high-pressure homogenizer. In various embodiments of the described method, dispersing the mixture into the aqueous medium to form a miniemulsion is carried out by ultrasonication.

The process of forming a miniemulsion may be carried out under conditions that suppress polymerization of the thermosetting polymer. For example, the miniemulsion may be carried out at temperatures that are sufficiently low to suppress polymerization.

In various embodiments, the aqueous medium comprises a stabilizer. The term "stabilizer", as used herein in relation to the nanoparticles or miniemulsion droplets, relates to a class of molecules that can stabilize the nanoparticles/droplets in a dispersion or emulsion, i.e. prevent coagulation or coalescence. The stabilizer molecules may adhere to or be associated with the nanoparticles or droplet surface. In various embodiments, the stabilizer molecules comprise a hydrophilic and a hydrophobic part, with the hydrophobic part interacting with the nanoparticle/droplet and the hydrophilic part exposed to the solvent.

In various embodiments, the stabilizer is a surfactant. Exemplary stabilizers include, but are not limited to, hydrophobically modified polyvinyl alcohol, sodium dodecyl sulfate, cetyltrimethylammonium bromide and ethoxylates of alkyl polyethylene glycol ethers. Alternative stabilizers/surfactants that may also be used in the presently described methods are known to those skilled in the art and include for example other known surfactants or hydrophobically modified polar polymers. These include so-called "protective colloids", i.e. water-soluble or water-dispersible polymers that can provide for colloidal stability. Typical examples besides polyvinyl alcohol (PVA) and its derivatives include polyethyleneimides, such as those commercially available under the trademark "Lupasol" from BASF, alkyl polyethylene glycol ether ethoxylates, such as those commercially available under the trademark "Lutensol" from BASF, and polyvinyl pyrrolidone and its derivatives. Another possible type of stabilizers is "pickering stabilizers", which are solid colloidal particles, including metal, metal oxide nanoparticles and platelets like Laponite, Closite from Rockwood.

In the methods described herein, stable droplets are obtained, which have typically a z-average size between 50 and 500 nm, preferably between 100 and 200 nm. The droplets may be seen as independent nanoreactors, in which various reactions from free radical polymerization to polyaddition may be carried out resembling reactions carried out in the bulk.

The method according to the first aspect further includes polymerizing the thermosetting polymer in the miniemulsion by stepwise polymerization in the presence of thermoplastic monomers to form a seed emulsion of thermoplastic monomer swollen thermosetting polymer nanoparticles.

The thermosetting polymer nanoparticles, which are formed by stepwise polymerization, form seeds in the emulsion which already include monomers of the thermoplastic, which are then further swollen by additional thermoplastic monomers. In this respect, the thermosetting polymer nanoparticles act as nuclei in/on which the thermoplastic polymer can grow.

Polymerization of the thermosetting polymer in the miniemulsion may be carried out at a temperature in the range of about 20 °C to about 85 °C, such as about 20 °C to about 65 °C, about 20 °C to about 45 °C, about 20 °C to about 35 °C, about 35 °C to about 85 °C, about 50 °C to about 85 °C, or about 60 °C to about 85 °C.

The method of the first aspect includes adding monomers of the thermoplastic polymer to the seed emulsion. By adding further quantities of the monomers of the thermoplastic polymer to the seed emulsion, the seed particles are further swollen. It has been found by the inventors of the present invention that further swelling of the seed particles before initiation of free radical polymerization to form the thermoplastic polymer shell layer results in generation of stable thermoset-thermoplastic hybrid nanoparticles.

A polymerization initiator is then added to the seed emulsion, and the monomers of the thermoplastic polymer are polymerized by free radical polymerization to form the hybrid nanoparticles. Exemplary polymerization initiators include peroxides, hydroperoxides, azo compounds, redox initiators, and certain compounds that form radicals under the influence of light (photoinitiators). Suitable polymerization initiators are widely known in the art and readily available. In various embodiments, the polymerization initiator is a water soluble initiator. In specific embodiments, the initiator is an azo initiator, such as V-50 [2,2'-azobis (2-methylpropionamidine)].

The seed emulsion comprising the initiator may be heated or irradiated to start the free radical polymerization. In various embodiments, polymerization of the monomers of the thermoplastic polymer is carried out at a temperature in the range of about 25 °C to about 85 °C, such as about 30 °C to about 75 °C, about 40 °C to about 65 °C, about 50 °C to about 55 °C, about 60 °C to about 85 °C, about 70 °C to about 85 °C, or about 80 °C to about 85 °C.

Generally, "about", as used herein, relates to ± 20 %, preferably ± 10 % of the numerical value to which it refers. "About 200" thus relates to 200 ± 40, preferably 200 ± 20.

In a second aspect, the invention relates to a thermoset-thermoplastic hybrid nanoparticle formed by a method according to the first aspect. Colloidally stable structured hybrid nanoparticles having a hard phase comprising or consisting of a thermosetting polymer, and a soft phase comprising or consisting of a thermoplastic polymer have been prepared using a novel one-pot synthesis approach as described above. By making use of a two-step reaction mechanism, namely stepwise polymerization and free radical polymerization, that is carried out in miniemulsions, colloidally stable hybrid nanoparticles having a thermosetting polymer phase and thermoplastic polymer phase have been obtained.

A further aspect of the invention relates to a thermoset-thermoplastic nanoparticle having a hard phase comprising or consisting of a thermosetting polymer, and a soft phase comprising or consisting of a thermoplastic polymer, wherein the hybrid nanoparticles have a size of between 100 nm to 200 nm.

In various embodiments, core-shell shaped thermoset-thermoplastic hybrid particles with thermosetting polymer as core and thermoplastic polymer as shell were obtained. the outer layer defining the shell may have a thickness of about 0.1 nm to about 50 nm, such as about 1 nm to about 50 nm, about 1 nm to about 25 nm, about 2 nm to about 5 nm, about 5 nm to about 50 nm, about 2 nm to about 25 nm, or about 5 nm to about 20 nm, such as about 10 nm, 12 nm, 14 nm, 15 nm, or about 20 nm. In various embodiments, the wall defining the shell is at least substantially uniform in thickness.

In various embodiments, the hard phase comprises or consists of an epoxy resin and the soft phase comprises or consists of a vinyl polymer.

All of the above-described nanoparticles may be provided in form of (stable) dispersions that allow their easy use and handling.

In a fourth aspect, the invention relates to use of a thermoset-thermoplastic hybrid nanoparticle formed by a method according to the first aspect, or a thermoset-thermoplastic hybrid nanoparticle according to the second aspect or third aspect in thin films for the applications in coatings and adhesives.

The present invention thus also relates to the formation of a continuous film comprising the thermoset-thermoplastic hybrid nanoparticles prepared according to the methods described herein, or to the thermoset-thermoplastic hybrid nanoparticles as described herein. Such a method may comprise applying a dispersion of the thermoset-thermoplastic hybrid nanoparticles as described herein to a carrier material or substrate and drying the dispersion to obtain a continuous composite film. The drying can be carried out by means known to those skilled in the art and routinely employed in this field.

The prepared thermoset-thermoplastic composite films including the nanoparticles described herein, which also form part of the invention, show significantly improved mechanical properties in terms of adhesion and hardness compared to corresponding thermoplastic films, due to the reinforcement effect from thermosetting polymers inside. Meanwhile, the composite films are as transparent as corresponding pure thermoplastic films. Therefore, the composite nanoparticles described herein and their dispersions have high application potentials in adhesives or high performance functional coatings.

In comparison with conventional inorganic fillers, thermosetting polymer in as-prepared films can be seen as "organic fillers", which are advantageous in that a high concentration of hard domains derived from the thermosetting polymer does not affect transparency of the hybrid thin films formed.

In the following, the invention is described in greater detail by reference to a specific example, namely core-shell nanoparticles having an epoxy thermoset core and a vinyl polymer shell. It is however understood that the present invention is not limited to such an embodiment, but can easily be adapted to use other core materials, shell materials, stabilizers, and particle sizes. Such alternative embodiments are also encompassed by the scope of the instant invention.

### Example

3 g of vinyl monomer (Styrene), 1.85 g of epoxy resin (D. E. R. 354 from Dow Chemical), and 1.15 g of phenalkamine (NX 5454 from Cardolite) were weighted in a glass beaker and mixed uniformly. The mixture was then added into a Lutensol AT 50 aqueous solution (0.3 g of Lutensol AT 50 dissolved in 23 g of water). After magnetic stirring for 2 minutes, a stable miniemulsion was obtained through 2 minutes of ultrasonication at 90 % amplitude using a Branson sonifier W450.

During homogenization, the mixture was cooled by ice-bath to avoid polymerization. Subsequently, the as-prepared miniemulsion was transferred into a round-bottom flask and cured at two different temperatures of 70 °C and room temperature for 2 hours and 24 hours respectively under magnetic stirring.

After curing, 3 g of vinyl monomers (Methyl acrylate) were fed into the miniemulsion and mixed for 30 min at room temperature under vigorous stirring. The mixture was then transferred to an oil bath at 70 °C and fed with V-50 aqueous solution (0.1 g of V-50 dissolved in 1 g of water) to initiate free radical polymerization. The reaction mixture was maintained under stirring for 24 hours at 70 °C.

Films were casted on pre-treated glass slides and hot-dip galvanized (HDG) steel panels from the dispersionby a 13 µm rod-coater and dried at 100 °C. 2,2,4-trimethyl-1,3-pentanediol monoisobutyrate (Texanol) was added into the dispersion before film-casting to soften the colloidal particles for better film-formation. The amount of Texanol applied is 10 wt% based on the solid content of latexes. Before film-casting, glass slides were cleaned thoroughly by acetone. HDG steel panels were degreased and cleaned thoroughly by Henkel cleaners with the trade name of Ridoline 1340 and Emalan 570 at 75 °C for 60 s with subsequent twice rinsing by D. I. Water. The panels were dried at 70 °C in an oven and cooled down to room temperature before use.

## Claims

1. Method for the generation of thermoset-thermoplastic hybrid nanoparticles containing a hard phase and a soft phase, wherein the hard phase comprises or consists of a thermosetting polymer and the soft phase comprises or consists of a thermoplastic polymer, the method comprising
a) providing a mixture of a thermosetting resin, monomers of a thermoplastic polymer, and a curing agent for the thermosetting resin;
b) dispersing the mixture into an aqueous medium to form a miniemulsion,
c) polymerizing the thermosetting resin in the miniemulsion by stepwise polymerization to form a seed emulsion of thermoplastic monomer swollen thermosetting polymer nanoparticles;
d) adding monomers of the thermoplastic polymer to the seed emulsion; and
e) adding a polymerization initiator and polymerizing the monomers of the thermoplastic polymer by free radical polymerization to form the thermoset-thermoplastic hybrid nanoparticles.

2. The method according to claim 1, wherein the thermosetting resin comprises or consists of an epoxy resin.

3. The method according to claim 2, wherein the curing agent for the thermosetting resin is selected from polyfunctional amines, acids and acid anhydrides, phenols, alcohols and thiols.

4. The method according to claim 3, wherein the epoxy resin/curing agent concentration in the mixture is in the range of 25 wt% to 75 wt%.

5. The method according to any one of claims 1 to 4, wherein the thermoplastic monomers are vinyl monomers.

6. The method according to any one of claims 1 to 5, wherein the glass transition temperature of the thermosetting polymer is in the range of - 30 °C to 120 °C, preferably in the range of 20 °C to 90 °C.

7. The method according to any one of claims 1 to 6, wherein dispersing the mixture into the aqueous medium to form a miniemulsion is carried out by ultrasonication or a high pressure homogenizer.

8. The method according to any one of claims 1 to 7, wherein polymerizing the thermosetting resin in the miniemulsion is carried out at a temperature of between 20 °C to 85 °C.

9. The method according to any one of claims 1 to 8, wherein the aqueous medium comprises a stabilizer, preferably a surfactant.

10. The method according to any one of claims 1 to 9, wherein polymerizing the monomers of the thermoplastic polymer is carried out at a temperature of between 25 °C to 85 °C.

11. The method according to any one of claims 1 to 10, wherein the initiator is a water soluble thermo initiator or redox initiator.

12. A thermoset-thermoplastic hybrid nanoparticle formed by a method according to any one of claims 1 to 11.

13. The thermoset-thermoplastic hybrid nanoparticle according to claim 12, wherein the thermoset-thermopastic hybrid nanoparticle has a core-shell shaped morphology, with the thermosetting polymer as core and the thermoplastic polymer as shell.

14. A thermoset-thermoplastic hybrid nanoparticle comprising
■ A hard phase comprising or consisting of a thermosetting polymer; and
■ A soft phase comprising or consisting of a thermoplastic polymer,
wherein the thermoset-thermoplastic hybrid nanoparticle has a z-average size in the range of 100 nm to 500 nm.

15. The thermoset-thermoplastic hybrid nanoparticle according to claim 14, wherein the hard phase comprises or consists of an epoxy resin and the soft phase comprises or consists of a vinyl polymer.

16. Use of a thermoset-thermoplastic hybrid nanoparticle formed by a method according to any one of claims 1 to 11 or a thermoset-thermoplastic hybrid nanoparticle according to any one of claims 12 to 15 in thin films for the application in coatings and adhesives.

17. Film comprising thermoset-thermoplastic hybrid nanoparticles formed by a method according to any one of claims 1 to 11 or thermoset-thermoplastic hybrid nanoparticles according to any one of claims 12 to 15.
